# EUROPEAN PATENT APPLICATION

(11) **EP 2 338 707 A1**
(43) Date of publication of application: **29.06.2011**
(21) Application number: 09425521.3
(22) Date of filing: 22.12.2009
(51) Int. Cl.: B60G 3/20, B60G 11/08

(54) **Suspension unit for a front axle of an industrial or commercial vehicle with upper and lower V-shaped arms and a transverse leaf spring**

(71) Applicant: Iveco S.p.A., 10156 Torino (IT)
(72) Inventor: Piasco, Federico, 10060 Candiolo (IT)
(74) Representative: Borsano, Corrado

(57) **Abstract**

Suspension unit (G) for a transport vehicle (V) of the unitized body type or of the unitized frame type, with front-wheel drive or with rear-wheel drive comprising, coupled to each wheel hub (MR) of at least the front wheels of said vehicle (V), shock absorbing means (1) fixed to said body (S) and to a frame (T) of said vehicle (V); a dynamic upper arm element (5) fixed to said wheel hub (MR) and to said body (S), in order to oscillate together with the wheel hub (MR) itself; leaf spring means (6) connected to said wheel hub (MR) and transversally extending with respect to the longitudinal axis (X) of the vehicle (V).

## Description

### Application field of the invention

The present invention relates to a suspension unit for a front axle of an industrial or commercial vehicle.

In particular, the invention is advantageously used for the shock absorbing of at least the front wheels of a transport vehicle of the unitized body type or of the unitized frame type with front-wheel drive or rear-wheel drive, such as for example a truck or similar, used for the commercial or the industrial transport, in order to guarantee the optimal stability of the vehicle and a constant and high comfort for the driver of the vehicle itself.

### Description of the prior art

In the field of the transport, the stability of the vehicle on uneven grounds is guaranteed by using suspension units which are applied to each wheel by connecting the wheel hub to the vehicle frame, as it is widely known in the art.

At present, the most widely used suspension unit, in particular for the shock absorbing of the front steering axle of a commercial and/or industrial transport vehicles, is of the McPherson type with springing system using coil springs, which is mounted on a shock absorber in order to absorb the oscillations of the vehicle's wheel on which it is applied. This type of suspension unit, even though it is able to effectively absorb the ground irregularities and to guarantee a good vehicle stability, presents structural limitations especially connected to the high tensions on the coil spring; such structural limitations increase the dimensions of the suspension system, thus making it not compatible with commercial vehicles.

In particular, the specific configuration of the mentioned suspension unit needs some external space, in the wheelhouse, suitable for housing each wheel and its respective bulky suspension unit, consequently reducing the space in the cabin of the vehicle over the front wheels, devoted to the driving parts, namely pedals and steering wheels.

This causes not only an uncomfortable condition for the driver, who has a more difficult control over the accelerator, clutch and brake pedal, which can even be not perfectly aligned with the steering wheel, but above all it may cause serious safety problems during the driving of the vehicle.

### Summary of the invention

The aim of the present invention is therefore to overcome the drawbacks of the prior art described above.

In particular, an aim of the present invention is to realize a suspension unit for the wheels, in particular for the front wheels, of a vehicle suitable for the commercial and industrial transport, which is effective and compact, in order to make the inside cabin wider and more comfortable, and consequently to make the driving of the vehicle itself safer and easier.

According to the claim 1 of the present invention, a front suspension unit for a commercial or industrial vehicle with front-wheel drive or rear-wheel drive of the unitized body (S) type or of the unitized frame type is realized, characterized in that it comprises, coupled to each wheel hub at least of the front steering wheels of said vehicle: shock-absorbing means whose upper end is fixed to a wheelhouse of said body; a lower arm, to which a lower part of said shock-absorbing means is fixed, said lower arm being hinged on one side to a frame structure, and on the other side to a lower pin of the wheel hub; an upper arm fixed to the upper pin of said wheel hub and to said body in order to oscillate together with said wheel hub; leaf spring means connected to said wheel hub and transversally extending with respect to the longitudinal axis of the vehicle.

The subject of the present invention is in particular a suspension unit for a front steering axle of an industrial or commercial vehicle, as described more fully in the claims, which are an integral part of this description.

### Brief description of the Figures

The technical details and the advantages of the invention will become more clear from the following detailed description given with reference to the figures attached hereto in which a preferred but non-limitative embodiment of the suspension unit according to the invention is schematically shown, in which:
- figure 1 shows a front schematic view, with some parts removed for the sake of clarity, of a preferred embodiment of the suspension unit for the front wheels of a vehicle according to the present invention;
- figure 2 shows a front view of a the rear part of the suspension unit shown in figure 1;
- figure 3 shows a perspective view from the bottom and on an enlarged scale of the suspension unit according to the invention applied to a front wheel hub of a vehicle;
- figure 4 shows a perspective view of the suspension unit shown in figure 2;
- figure 5 shows a perspective view of a detail of the suspension unit shown in figure 1; and
- figure 6 shows a perspective view of an internal portion of the driving cabin of an industrial vehicle equipped with the suspension unit according to the present invention.
- Figure 7 shows an alternative embodiment of the suspension unit comprising a stabilizer bar.

### Detailed description of preferred embodiments of the invention

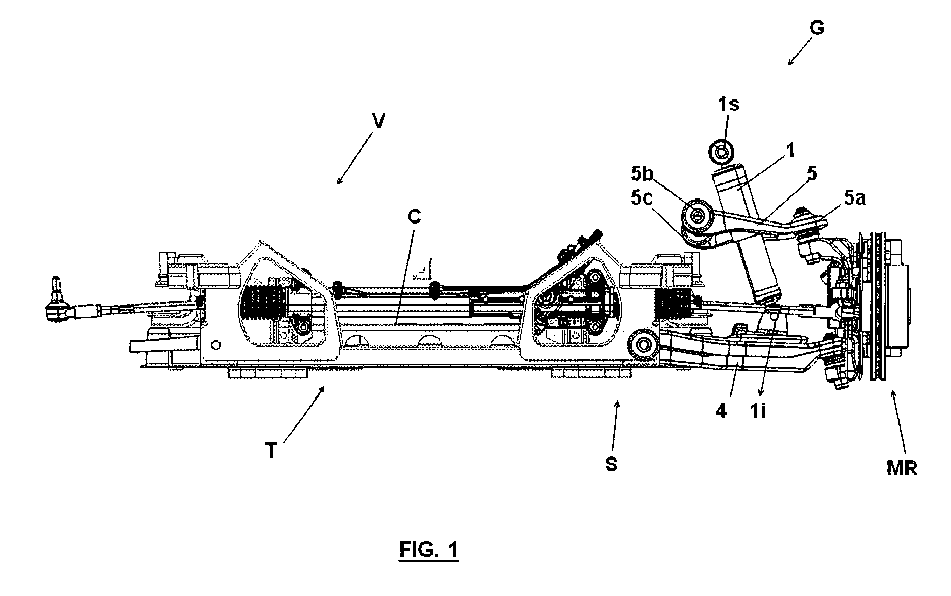

With reference to figures 1, 2 and 4, G generally indicates a suspension unit suitable for being applied and act on each wheel hub MR of the wheels of a vehicle V, in particular the front wheels, for the commercial and industrial transport, with rear-wheel drive and with the engine (known in the art and not shown in the attached figures) longitudinally placed and mounted or with front-wheel drive and with the engine transversally placed on a unitized body S or on a unitized frame by means of support Mf and fixing means known in the art.

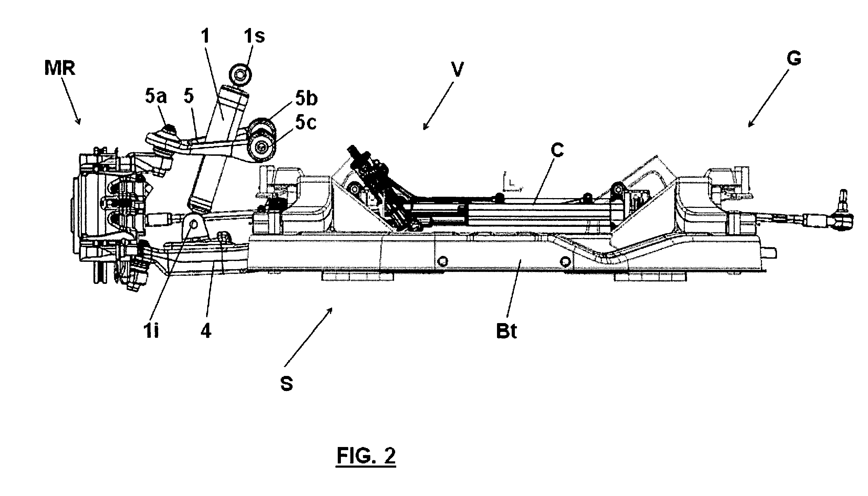

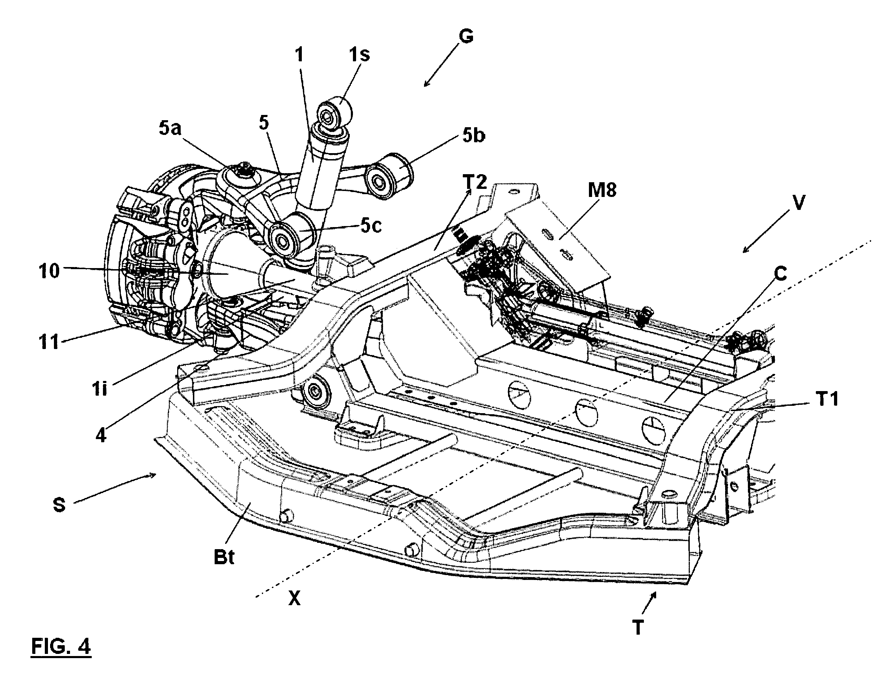

According to what shown in figures 2 and 4, the front part of the bodywork comprises a frame structure T suitable for supporting the longitudinal engine, such structure T being formed by a pair of longitudinal members T1 and T2 connected to each other by a rear cross bar Bt and by a front cradle C substantially saddle-shaped and transversally extending with respect to the longitudinal axis of the vehicle V.

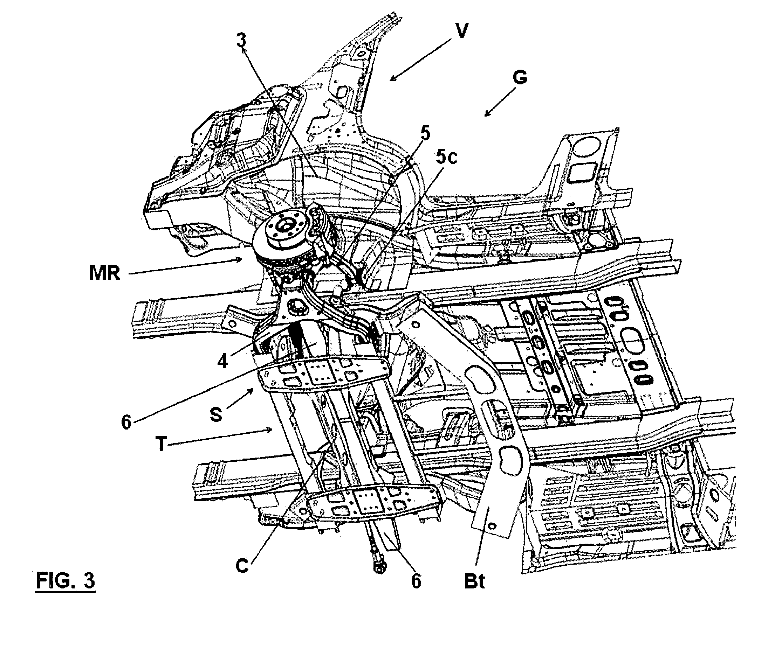

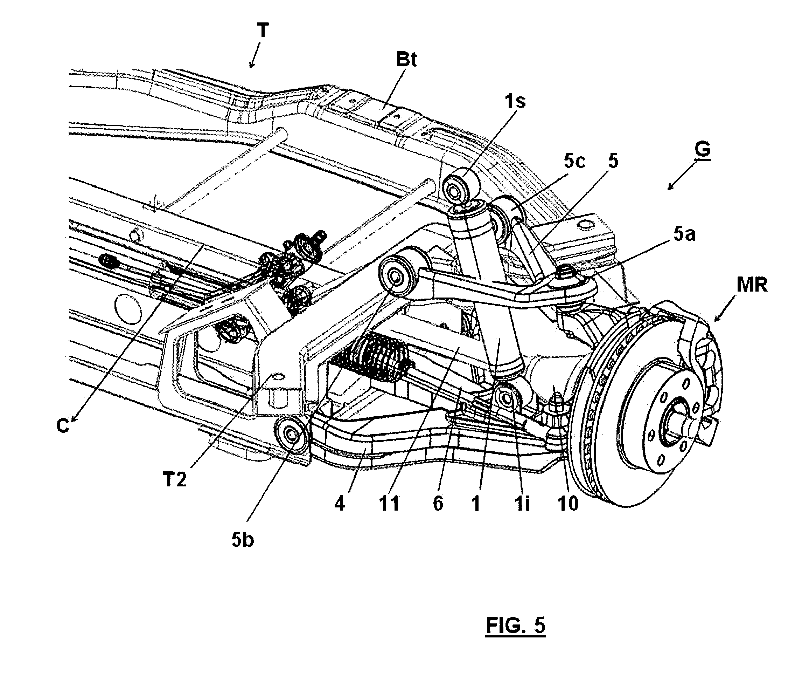

According to what is better shown in figures 3 and 5, the unit G comprises as associated to each wheel hub MR:
- a shock absorber 1, preferably but not limited to, of the hydraulic or oleodynamic type, which is placed in a slightly sloped position with respect to the vertical and whose upper part converges towards the shock absorber of the other wheel hub (figures 1 and 2), such upper part 1s being fixed to the vehicle frame V, in particular to the wheelhouse 3;
- an element 4, substantially Y-shaped, to which the lower part 1i of the shock absorber 1 is fixed; the element 4 serves as lower arm of the suspension, and is hinged on one side to the frame structure T, and on the other side to the lower pin of the wheel hub MR;
- an element or upper arm 5 fixed to the wheel hub MR and to the body S in order to oscillate together with the wheel hub MR itself; the arm 5 being substantially V-shaped, whose vertex 5a being connected to the upper pin of the wheel hub MR and whose two ends 5b and 5c being fixed to the body S, in correspondence of the wheelhouse 3 (Fig. 3);
- a transversal leaf spring 6 connected to the element 4, such leaf spring being preferably of the single-leaf type or of the multi-leaf type, and extending under the cradle C itself, namely transversally with respect to the longitudinal axis X of the vehicle V.

In an alternative embodiment, with reference to the figures 4 and 5, given the reduced dimensions of the shock absorber 1, it is possible to add a joint 10 to the wheel hub for connecting a front-wheel drive axle shaft 11. In this case the shock absorber 1 is placed sideways with respect to the axle shaft 11.

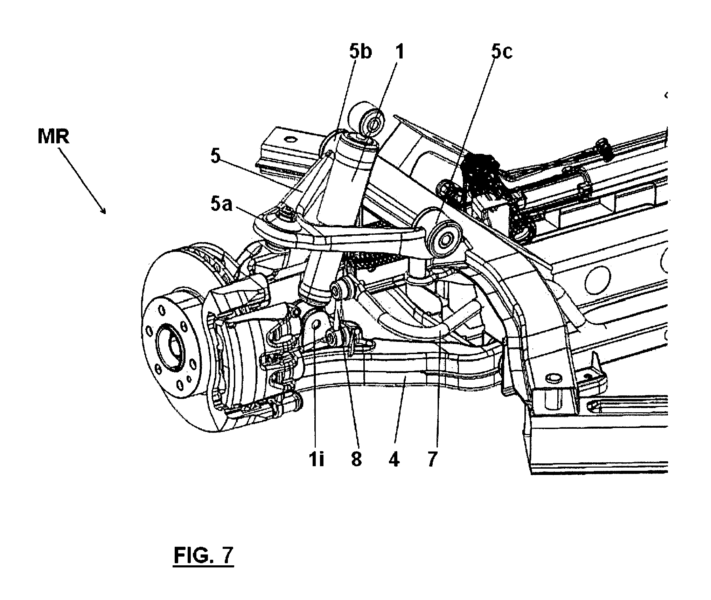

In a further alternative embodiment (fig. 7) a stabilizer bar 7 having curved profile with the concavity substantially facing the front part of the vehicle V is present, such bar 7 is fixed by means of a rod 8 to the lower arm 4.

The advantages deriving from the use of this invention are evident.

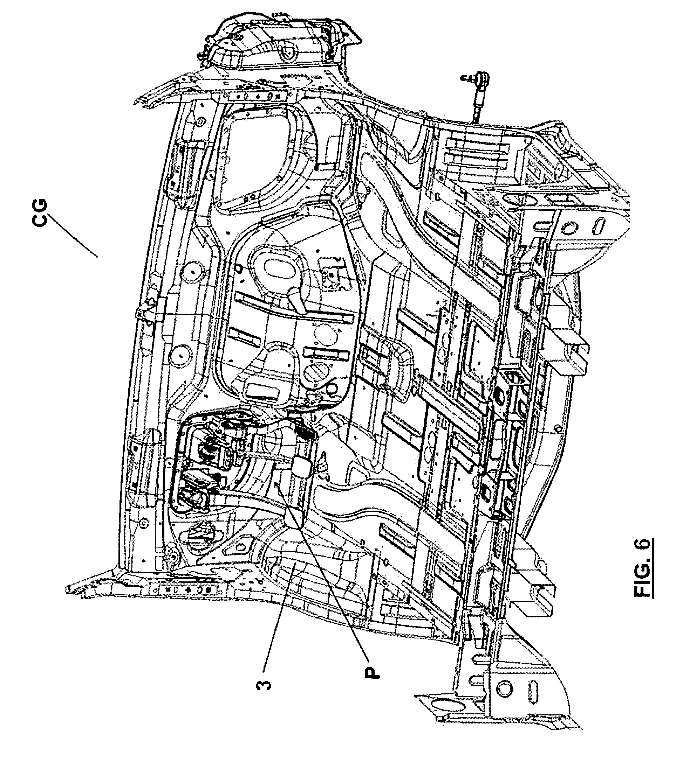

Using the suspension unit G described above, since there are no spring means, as shown in figure 6, the front part of the driving cabin CG, where the control pedals P (clutch, brake and accelerator) are placed, is larger than the prior art, thanks to the reduced dimensions of the wheelhouse deriving from the positioning of the suspension group G for front wheels described above.

The driver of the vehicle V, therefore, can drive in a more comfortable and safer way, by removing any possibility of acting on a control pedal and acting also on the adjacent pedal by mistake, because of the reduced space available for the driver's foot.

The invention thus contrived can be subjected to numerous variations or modification, without departing from the scope of the invention; moreover all the details may be replaced by others technically equivalent.

From the description set forth above it will be possible for the person skilled in the art to embody the invention with no need of describing further construction details.

## Claims

**1.** Front suspension unit (G) for a commercial or industrial vehicle (V) with front-wheel drive or with rear-wheel drive of the unitized body (S) type or of the unitized frame type, **characterized in that** it comprises, coupled to each wheel hub (MR) of at least the front steering wheels of said vehicle (V):
- shock-absorbing means (1), an upper end of which is fixed in a wheelhouse (3) of said body;
- a lower arm (4), to which a lower part (1i) of said shock absorbing means (1) is fixed, said lower arm being hinged on one side to a frame structure (T), and on the other side to a lower pin of the wheel hub (MR);
- an upper arm (5) fixed to the upper pin of said wheel hub (MR) and to said body (S) in order to oscillate together with said wheel hub;
- leaf spring means (6) connected to said wheel hub (MR) and transversally extending with respect to the longitudinal axis (X) of the vehicle (V).

**2.** Suspension unit according to claim 1, wherein said leaf spring means (6) are placed inside a transversal cradle (C) suitable for defining a housing of the motor means.

**3.** Suspension unit according to claim 2, wherein said cradle (C) is suitable for connecting between each other the two longitudinal members (T1,T2) of said frame structure (T).

**4.** Suspension unit according to one of the previous claims from 1 to 3, wherein said dynamic element (5) comprises an arm (5) substantially V-shaped; the vertex (5a) of said arm (5) being connected to said wheel hub (MR) and the two ends of said arm (5), between which said shock absorber means (1) extend, being directly fixed to said body (S).

**5.** Suspension unit according to any of the previous claims from 1 to 4, wherein the upper part (1s) of said shock absorbing means (1) are fixed to said frame (T) of the vehicle (V), in correspondence of a wheelhouse (3), and the lower part (1i) of said shock absorbing means (1), substantially Y-shaped, being part of said body (S).

**6.** Suspension unit according to any of the previous claims, wherein said shock absorbing means (1) are fixed sideways with respect to a drive axle shaft (11) connected by means of a joint (10) to said wheel hub (MR).

**6.** Suspension unit according to any of the previous claims, comprising a stabilizer bar (7) having curved profile with the concavity substantially facing the front part of the vehicle, such bar being fixed by means of a rod (8) to the lower arm (4).

**7.** Transport vehicle (V) of the unitized body (S) type or of the unitized frame type, comprising a suspension unit according to one or more of the previous claims from 1 to 7, coupled to each wheel hub (MR) of at least the front wheels of the vehicle (V) itself.
